(19) Europäisches Patentamt
European Patent Office
Office européen des brevets

(11) EP 4 763 851 A1

(12) # EUROPEAN PATENT APPLICATION

(43) Date of publication:
**24.06.2026 Bulletin 2026/26**

(21) Application number: **25212864.0**

(22) Date of filing: **31.10.2025**

(51) International Patent Classification (IPC):
***C07F 9/30*** *(2006.01)* ***C08K 5/5313*** *(2006.01)*
***D01F 1/07*** *(2006.01)* ***D06M 13/285*** *(2006.01)*

(52) Cooperative Patent Classification (CPC):
(C-Sets available)
**C08K 5/5313; C07F 9/301; D01F 1/07;**
**D06M 13/285;** D06M 2101/06; D06M 2101/32;
D06M 2200/30; Y02E 60/10 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.12.2024 CN 202411875707**

(71) Applicants:
- **Shanghai Kingfa Sci. & Tech. DVPT. Co., Ltd.**
  **Qingpu, Shanghai 201714 (CN)**
- **KINGFA SCI. & TECH. CO., LTD.**
  **Guangzhou, Guangdong 510663 (CN)**
- **Liaoning Kingfa Biomaterial Co., Ltd.**
  **Panjin City, Liaoning Province 124000 (CN)**

(72) Inventors:
- **LI, Jide**
  **Guangzhou, Guangdong, 510663 (CN)**
- **CHEN, Pingxu**
  **Guangzhou, Guangdong, 510663 (CN)**
- **YE, Nanbiao**
  **Guangzhou, Guangdong, 510663 (CN)**
- **JING, Xinke**
  **Guangzhou, Guangdong, 510663 (CN)**
- **LIU, Zhen**
  **Guangzhou, Guangdong, 510663 (CN)**
- **TAN, Xiaobin**
  **Guangzhou, Guangdong, 510663 (CN)**
- **TANG, Ming**
  **Guangzhou, Guangdong, 510663 (CN)**

(74) Representative: **Meyer, Thorsten**
**Meyer Patentanwaltskanzlei**
**Pfarrer-Schultes-Weg 14**
**89077 Ulm (DE)**

(54) **POLYMER ADDITIVE, FLAME RETARDANT, POLYMER MOLDING MATERIAL, AND PREPARATION METHOD AND USES THEREOF**

(57) The present disclosure discloses a polymer additive, a flame retardant, a polymer molding material, and a preparation method and a use thereof. The polymer additive comprises aluminum diethylphosphinate and aluminum ethylbutylphosphinate; the polymer additive satisfies a relationship of $0.90 \leq \Delta H \leq 1.05$, wherein $\Delta H$ is a dual enthalpy ratio and defined by Equation (1); the polymer additive further satisfies following relationships: 135 °C ≤ T1 ≤ 160 °C, 165 °C ≤ T2 ≤ 185 °C, and 180 °C ≤ T3 ≤ 200 °C; and the Equation (1) is as follows: $\Delta H = (H2+H3)/H1$. The polymer additive has a specific crystal transition state, and a polymer molding material comprising the polymer additive has lower molding shrinkage during the molding process.

EP 4 763 851 A1

(52) Cooperative Patent Classification (CPC): (Cont.)

C-Sets
**C08K 5/5313, C08L 67/02;**
**C08K 5/5313, C08L 77/02;**
**C08K 5/5313, C08L 77/06**

## Description

### TECHNICAL FIELD

The present disclosure relates to the technical field of flame retardants, and more specifically, it relates to a polymer additive, a flame retardant, a polymer molding material, and a preparation method and a use thereof.

### BACKGROUND

Aluminum diethylphosphinate (ADP) is a halogen-free and environmentally friendly flame retardant. It is a white powder in appearance, and is insoluble in water and most organic solvents, but soluble in strong acid solutions and strong alkali solutions. It has the characteristics of high flame retardancy, high thermal stability, low smoke, a small particle size, a low specific gravity, good dispersibility and compatibility. As an efficient and environmentally friendly halogen-free flame retardant, aluminum diethylphosphinate is widely used in inflaming retarding of thermoplastics, such as Polyamide 6T (PA6T, poly(hexamethylene terephthalamide)) , Polyamide 10T (PA10T, poly(decamethylene terephthalamide)), Polyamide 66 (PA66, poly(hexamethylene adipamide)) and polybutylene terephthalate (PBT), as well as fibers and textiles.
A composite system comprising aluminum diethylphosphinate is widely used in the field of halogen-free flame-retardant glass fiber reinforced engineering plastics, such as, aluminum diethylphosphinate and melamine polyphosphate (MPP) system, aluminum diethylphosphinate and melamine cyanuric acid (MCA) system, and aluminum diethylphosphinate and aluminum phosphite system. These systems have the advantages of high flame retardancy, high temperature resistance, and low loss of resin matrix performance, and are widely used.
In the application of aluminum diethylphosphinate in flame retarding of modified polymer composites, such as modified thermoplastic plastics, excessive molding shrinkage of these materials frequently occurs, which leads to issues, such as mismatches of injection parts during installation or loosening during assembly, particularly in the field of precise injection parts.
Chinese Patent Application CN110407869A discloses a flame retardant comprising monoaluminum 3, 3, 3-trifluoropropyl phosphinate, which is combined with aluminum diethylphosphinate to reduce the corrosiveness of aluminum diethylphosphinate to the screw during the extrusion modification. However, the aluminum 3, 3, 3-trifluoropropyl phosphinate does not solve the problem of excessive molding shrinkage of modified polymer composite materials. Chinese
Patent Application CN113637193A discloses a nylon heat-insulating strip, reinforced nylon, or glass fiber reinforced Polyamide 6/Polyamide 66 composite material, comprising Nylon 6633, aluminum diethylphosphinate, an antioxidant, a glass fiber, a lubricant, a polyethylene-octene elastomer (POE) grafted with a maleic anhydride as a toughener, and an additive. By adding the glass fiber to reinforce the nylon itself, the water absorption of the composite material, together with the molding shrinkage of products, is reduced, thereby improving the dimensional stability of the products. However, in this solution, aluminum diethylphosphinate is only used as a flame-retardant component, and during its application, it still will cause an excessive shrinkage of the modified polymer composite material during molding.

### SUMMARY OF THE DISCLOSURE

**In** view of the above problems in the prior art, an objective of the present disclosure is to provide a polymer additive, which has a relatively special crystal morphology and a relatively special crystalline structure. When the polymer additive is applied in a polymer, the polymer has a lower molding shrinkage rate.
**In** order to achieve the above objective, the present disclosure provides the following technical solution.
**In** a first aspect, the present disclosure provides a polymer additive, comprising aluminum diethylphosphinate and aluminum ethylbutylphosphinate;

the polymer additive satisfies a relationship of $0.90 \le \Delta H \le 1.05$, wherein $\Delta H$ is a dual enthalpy ratio and defined by Equation (1), and the polymer additive also satisfies following relationships: 135 °C ≤ T1 ≤ 160 °C, 165 °C ≤ T2 ≤ 185 °C, and 180 °C ≤ T3 ≤ 200 °C;

$$\Delta H=(H2+H3)/H1 \qquad (1);$$

the H1, H2, H3, T1, T2 and T3 are measured by differential scanning calorimetry (DSC) comprising the following steps: in nitrogen atmosphere, heating the polymer additive from room temperature to a maximum temperature of 300 °C at a heating rate of 20 °C/min, holding the maximum temperature for 3 minutes, and then cooling the polymer additive from

the maximum temperature to room temperature at a cooling rate of 20 °C/min to obtain a cooling curve of the polymer additive; keeping the polymer additive at room temperature for 3 minutes, and then reheating the polymer additive from room temperature to the maximum temperature of 300 °C at a heating rate of 20 °C/min to obtain a second heating curve of the polymer additive;

H1 represents a peak area under an exothermic peak formed between an onset temperature and an endset temperature of the exothermic peak on the cooling curve; two endothermic peaks on the second heating curve, ordered from low to high temperatures, are respectively defined as a first endothermic peak and a second endothermic peak; H2 represents a peak area under the first endothermic peak formed between an onset temperature and an endset temperature of the first endothermic peak on the second heating curve, H3 represents a peak area under the second endothermic peak formed between an onset temperature and an endset temperature of the second endothermic peak on the second heating curve;

T1 is a peak temperature of the exothermic peak on the cooling curve, T2 is a peak temperature of the first endothermic peak on the second heating curve, and T3 is a peak temperature of the second endothermic peak on the second heating curve.

The differential scanning calorimeter (DSC) is one of the most commonly used thermal analyzers, and can be used for characterization of melting and crystallization processes of materials, which reflects the relationship between molecular chain structures and crystallization. In addition, for some materials without melting phenomenon, obvious endothermic peaks and exothermic peaks will also appear during their DSC tests, and the differences in the endothermic peaks and the exothermic peaks are also related to changes in their molecular structures or crystallization performances. The changes in their molecular structures or crystal structures will directly determine the melting or crystallization behaviors of these materials analyzed by DSC during heating or cooling, as well as the differences in the endothermic peaks and the exothermic peaks. Moreover, the differences in the molecular structures of these materials will also affect their processing fluidity and mechanical properties during processing, and further affect the dimensional stability and molding shrinkage of these materials.

In the present disclosure, it has been found through research that, although the polymer additives provided in the present disclosure have no melting phenomenon at 30-300 °C during testing, different polymer additives have significantly different endothermic and exothermic peaks. The inventors have found through research that the specific dual enthalpy ratio formed in the endothermic peaks and the exothermic peak of a polymer additive, along with the specific peak temperatures (T1, T2, T3), affects the specific crystalline transition state of the polymer additive. Such state endows polymer molding materials with a better dimensional stability during the molding process, thereby enabling the polymer molding materials to exhibit lower molding shrinkage. Therefore, when using the polymer additive possessing this specific crystalline transition state as an additive, polymer molding materials will have lower molding shrinkage.

In some embodiments, the peak areas H1, H2, H3 and peak temperatures T1, T2, T3 can be obtained by marking peaks and calculating the integration of the peak areas through the existing methods in the art, for example, by using the software provided in the DSC device. Specifically, in some embodiments, when differential scanning calorimetry is adopted for testing, a weight of a testing sample for the polymer additive can be 10±0.5 mg.

Specifically, in some embodiments, the peak areas H1, H2, H3 and the peak temperatures T1, T2, T3 can be integrated or marked for multiple times and then averaged, such as, integrated or marked for once, twice, 3 times, 4 times, or 5 times. More specifically, from the perspective of saving operations and maintaining data reproducibility and reliability, the peak areas H1, H2, H3 and peak temperatures T1, T2, T3 each and independently can be measured for 2-4 times and then averaged.

In some embodiments, the polymer additive comprises, in percentages by weight, 99.01%-99.99% of aluminum diethylphosphinate and 0.01%-0.99% of aluminum ethylbutylphosphinate. More specifically, a content of the aluminum diethylphosphinate in the polymer additive may be any one of 99.10%, 99.20%, 99.30%, 99.40%, 99.50%, 99.60%, 99.70%, 99.80%, and 99.90%, or an interval range defined by any two of the above values, such as 99.01%-99.40%, 99.01%-99.70%, 99.01%-99.90%, 99.30%-99.60%, 99.50%-99.90%, 99.70%-99.99%, 99.90%-99.99%, but is not limited thereto. More specifically, a content of the ethylbutyl phosphinate aluminum in the polymer additive may be any one of 0.03%, 0.05%, 0.08%, 0.10%, 0.20%, 0.30%, 0.40%, 0.50%, 0.60%, 0.70%, 0.80%, 0.90%, 0.93%, 0.95%, and 0.97%, or an interval range defined by any two of the above values, such as 0.01%-0.10%, 0.01%-0.30%, 0.01%-0.70%, 0.10%-0.80%, 0.30%-0.90%, 0.70%-0.93%, 0.80%-0.99%, and 0.90%-0.99%, but is not limited thereto.

In some embodiments, the aluminum diethylphosphinate and the aluminum ethylbutylphosphinate may exist in a form of a physical mixture; in some embodiments, the aluminum diethylphosphinate and the aluminum ethylbutylphosphinate may exist in a form of an ionic chemical coprecipitate represented by formula I and/or formula II; in some embodiments, aluminum diethylphosphinate and aluminum ethylbutylphosphinate may exist in a form of both a physical mixture and an ionic chemical coprecipitate represented by formula I and/or formula II.

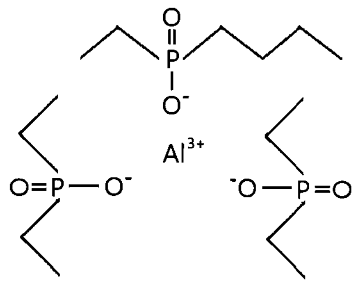

I

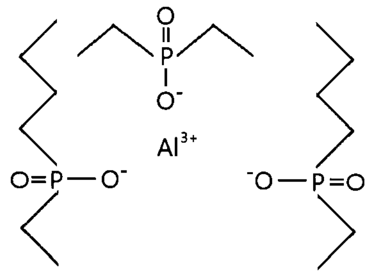

II

More specifically, in the present disclosure, the dual enthalpy ratio ΔH may be any one of 0.92, 0.94, 0.96, 0.98, 0.99, 1.00, 1.02, 1.04, and 1.05, or an interval range defined by any two of the above values, such as 0.92-0.98, and 0.96-1.05, but is not limited thereto.

More specifically, in the present disclosure, the T1 may be any one of 135 °C, 138 °C, 140 °C, 142 °C, 144 °C, 146 °C, 148 °C, 150 °C, 152 °C, 154 °C, 156 °C, and 158 °C, or a range defined by any two of the above values, such as 140 °C-150 °C, and 146 °C-154 °C, but is not limited thereto.

More specifically, in the present disclosure, the T2 may be any one of 168 °C, 170 °C, 172 °C, 174 °C, 176 °C, 178 °C, 180 °C, and 183 °C, or a range defined by any two of the above values, such as 174 °C-178 °C, but is not limited thereto.

More specifically, in the present disclosure, the T3 may be any one of 182 °C, 184 °C, 186 °C, 188 °C, 190 °C, 192 °C, 194 °C, 196 °C, and 198 °C, or an interval defined by any two of the above values, such as 184 °C-188 °C, and 190 °C-192 °C, but is not limited thereto.

In some embodiments, the dual enthalpy ratio ΔH of the polymer additive satisfies the relationship of $0.92 \leq \Delta H \leq 1.05$.

In some embodiments, the polymer additive satisfies the following relationships: 140 °C ≤ T1 ≤ 156 °C, 172 °C ≤ T2 ≤ 178 °C, and 184 °C ≤ T3 ≤ 192 °C.

In a second aspect, the present disclosure provides a preparation method of a polymer additive, comprising the following steps:

S1. under nitrogen protection, allowing a water-soluble hypophosphite or hypophosphorous acid to react with an olefin in the presence of an initiator, so that 2.00 to 2.05 molecules of olefins are added to each phosphorus atom in the water-soluble hypophosphite or hypophosphorous acid itself, thereby obtaining an intermediate aqueous solution containing a diethylphosphinate;
S2. allowing the intermediate aqueous solution obtained in the step S1, a surfactant and an aluminum salt solution to react, thereby obtaining the polymer additive.

In some embodiments, in the step S1, a reaction temperature is in a range of from 80 °C to 120 °C.

In some embodiments, in the step S1, a reaction pressure is in a range of from 0.6 MPa to 2.0 MPa.

In some embodiments, in the step S1, the reaction temperature is adjusted in two substeps, wherein in a first substep, the reaction temperature is raised to 80-90 °C and held for 3.5 h to 4.5 h, and the initiator is continuously added during the holding period; then in a second substep, the reaction temperature is further raised to 90-100 °C and held for 0.5 h to 1.5 h; alternatively, the reaction temperature is adjusted in two substeps, wherein in a first substep, the reaction temperature is raised to 105-115 °C and held for 3.5 h to 4.5 h, and the initiator is continuously added during the holding period; then in a second substep, the reaction temperature remains at 105-115 °C and held for 0.5 h to 1.5 h.

In some embodiments, in the step S2, a weight percentage of the diethylphosphinate in the intermediate aqueous solution is in a range of from 15 wt.% to 25 wt.%; in the step S2, a weight percentage of a water-soluble aluminum salt in the aluminum salt solution is in a range of from 20 wt.% to 24 wt.%.

In some embodiments, in the step S2, the surfactant is one or more selected from the group consisting of an alkyl phosphate ester, a salt of the alkyl phosphate ester (an alkyl phosphate salt), an ether alcohol phosphate ester and a salt of the ether alcohol phosphate ester (an ether alcohol phosphate salt).

Specifically, the alkyl phosphate ester or the alkyl phosphate salt may be selected from C8-18 alkyl phosphate esters or C8-18 alkyl phosphate salts; more specifically, the alkyl phosphate ester includes, but is not limited to, monolauryl phosphate; the alkyl phosphate salt includes, but is not limited to, potassium monododecyl phosphate. Specifically, the ether alcohol phosphate ester or the ether alcohol phosphate salt can be selected from C8-18 ether alcohol phosphate esters or C8-18 ether alcohol phosphate salts; more specifically, the ether alcohol phosphate ester includes, but is not

limited to, laureth phosphate; the ether alcohol phosphate salt includes, but is not limited to, potassium laureth phosphate.

In some embodiments, an additive amount of the surfactant is 0.001 wt.% to 0.10 wt.% of a weight of the intermediate aqueous solution. Preferably, the additive amount of the surfactant is 0.01 wt.% to 0.08 wt.% of the weight of the intermediate aqueous solution.

In some embodiments, before the surfactant is added, alkaline liquor is also added to the intermediate aqueous solution for neutralization and removal of a free acid in the intermediate aqueous solution. More specifically, the intermediate aqueous solution is neutralized to a pH of 5-6.5.

In some embodiments, in the step S2, the intermediate aqueous solution and the aluminum salt solution are used in equal amounts.

In some embodiments, the aluminum salt solution is added in one go, a reaction temperature is raised to 50-60 °C during the addition process of the aluminum salt solution, and an addition time of the aluminum salt solution is controlled to be 90-110 minutes; and/or

In the step S2, the aluminum salt solution is added in two stages, wherein in a first stage, 15%-35% of an equivalent weight of the aluminum salt solution is added with an addition time of 30-40 minutes, and a reaction temperature is controlled to be 35-45°C; in a second stage, 65%-85% of the equivalent weight of the aluminum salt solution is added with an addition time of 30-40 minutes, and the reaction temperature is controlled to be 55-60 °C.

In some embodiments, the water-soluble hypophosphite may be potassium hypophosphite and/or sodium hypophosphite.

In some embodiments, the water-soluble aluminum salt may be one or more selected from the group consisting of aluminum oxide, aluminum hydroxide, aluminum peroxide, aluminum sulfate, aluminum hydrogen sulfate, hydrated aluminum sulfate, aluminum persulfate, aluminum phosphate, and aluminum phosphite.

In a third aspect, the present disclosure provides another preparation method of a polymer additive, comprising the following steps:

S1. under nitrogen protection, allowing a hypophosphorous acid to react with an olefin in the presence of an initiator, so that 2.00 to 2.05 molecules of olefins are added to each phosphorus atom in the hypophosphorous acid itself, thereby obtaining an intermediate aqueous solution containing a diethylphosphinic acid;

S2. preparing an aluminum hydroxide gel;

S3. dripping the intermediate aqueous solution obtained in the step S1 into the aluminum hydroxide gel obtained in the step S2 for reaction, raising a reaction temperature to 50-60 °C, holding the reaction temperature for 0.1-5 h, further raising the reaction temperature to 90-120 °C, and holding the reaction temperature for 0.5-5 h, thereby obtaining the polymer additive.

In some embodiments, in the step S1, a reaction temperature is adjusted in two substeps, wherein in a first substep, the reaction temperature is raised to 75-85 °C and held for 2.5-3.5 h, and the initiator is continuously added during the holding period; further, during the holding period, a part of reaction materials in a reactor are introduced into a venturi ejector and fully mixed with the olefin (for example, ethylene) introduced into the venturi ejector, and then enter the reactor after external circulation; then in a second substep, the reaction temperature remains at 75-85 °C and held for 0.5 h to 1.5 h.

In some embodiments, in the step S2, a reaction temperature for preparing the aluminum hydroxide gel is 10-20 °C.

In some embodiments, in the step S3, the reaction temperature is raised to 50-60 °C at a heating rate of 2-10 °C /h; and/or

In some embodiments, in the step S3, the reaction temperature is raised to 90-120 °C at a heating rate of 11-25°C /h.

In some embodiments, in the step S3, a molar ratio of the diethylphosphinic acid to an aluminum ion in the aluminum hydroxide gel is 3: (1-1.01).

In some embodiments, the olefin may be at least one selected from the group consisting of ethylene, propylene, 1-butene, 2-butene, 1-pentene, 1-hexene, and 1-octene.

In some embodiments, the initiator is one or more selected from the group consisting of organic peroxides, inorganic peroxides, and azo compounds. More specifically, the inorganic peroxide may be one or more selected from the group consisting of sodium persulfate, ammonium persulfate, and potassium persulfate. The organic peroxide may be one or more selected from the group consisting of perbenzoic acid, peroxylauric acid, di-tert-butyl peroxide, carbonate peroxide, peroxyacetic acid, tert-butyl peroxyisobutyrate, tert-butyl peroxypivalate, and tert-butyl peroxy-2-ethylhexanoate; the azo compound may be azobisisobutyronitrile and/or 2,2'-azobis(2,4-dimethyl)valeronitrile.

In a fourth aspect, the present disclosure provides a use of the above polymer additive in reducing the shrinkage of a polymer.

In a fifth aspect, the present disclosure provides a use of the polymer additive as a reactive or non-reactive flame retardant for at least one selected from the group consisting of a polymer, a varnish, a foaming coating, wood and other cellulose-containing products; or a use of the polymer additive in preparation of a flame-retardant polymer molding

material or a flame-retardant polymer molding; or a use of the polymer additive for imparting flame retardancy to a polyester fabric, and/or a pure cellulose fabric, and/or a blended cellulose fabric by impregnation.

In some embodiments, the polymer additive is used together with a synergist; the synergist is one or more selected from the group consisting of melamine phosphate, di(melamine) phosphate, penta(melamine) triphosphate, tri(melamine) diphosphate, tetra(melamine) triphosphate, hexa(melamine) pentaphosphate, melamine diphosphate, melamine tetraphosphate, melamine pyrophosphate, melamine polyphosphate, melam polyphosphate, melem polyphosphate, and melon polyphosphate; or, the synergist is a melamine condensation product, such as melam, melem, and/or melon; or, the synergist is one or more selected from the group consisting of an oligoester of tris(2-hydroxyethyl) isocyanurate and aromatic polycarboxylic acid, benzoguanamine, tris(2-hydroxyethyl) isocyanurate, allantoin, glycoluril, melamine, melamine cyanurate, urea cyanurate, dicyandiamide, and guanidine; or, the synergist is a nitrogen-containing phosphate having a formula of $(NH_4)_yH3\text{-}yPO_4$ or $(NH_4PO_3)_z$, wherein y is 1-3 and z is 1-10000; or, the synergist is aluminum phosphite, and/or aluminum pyrophosphite; or, the synergist is one or more selected from the group consisting of zinc borate, zinc carbonate, zinc stannate, basic zinc stannate, zinc phosphate, zinc oxide, zinc hydroxide, tin oxide hydrate, basic zinc silicate, magnesium hydroxide, hydrotalcite, and magnesium carbonate; or, the synergist is one or more selected from the group consisting of ethylphosphonate, butylphosphonate, n-butylphosphonate, sec-butylphosphonate, and hexylphosphonate.

In some embodiments, the polymer additive is used together with another additive, wherein the another additive is at least one selected from the group consisting of an antioxidant, an UV stabilizer, a gamma ray stabilizer, a hydrolysis stabilizer, an antistatic agent, an emulsifier, a nucleating agent, a softener, a processing aid, an impact modifier, a dye, and a pigment.

In some embodiments, 0.0001 wt.% - 99.7999 wt.% of the polymer additive, 0.1 wt.% - 40 wt.% of the synergist and 0.1 wt.% - 40 wt. % of the another additive are used.

In a sixth aspect, the present disclosure provides a flame retardant thermoplastic or thermosetting polymer composite material, wherein the flame retardant thermoplastic or thermosetting polymer composite material is at least one selected from the group consisting of a flame retardant thermoplastic or thermosetting polymer molding material, a flame retardant thermoplastic or thermosetting polymer molding, a flame retardant thermoplastic or thermosetting polymer film, a flame retardant thermoplastic or thermosetting polymer filament, and a flame retardant thermoplastic or thermosetting polymer fiber; and the flame retardant thermoplastic or thermosetting polymer composite material comprises 0.5 wt.% - 45 wt.% of the polymer additive, 0.5 wt.% - 95 wt.% of a thermoplastic or thermosetting polymer or a mixture thereof, 0 - 55 wt.% of a synergist, and 0 - 55 wt.% of a filler or a reinforced material.

In some embodiments, the thermoplastic or thermosetting polymer is one or more selected from the group consisting of a polyester, a polyamide, a thermoplastic elastomer, a thermoplastic polyurethane, a thermoplastic polyester elastomer, a styrenic polymer, a polyketone, a polyolefin, and a polyacrylate.

In some embodiments, the polyolefin may be a mono-olefin polymer and/or a diene polymer, such as polypropylene, polyisobutylene, poly-1-butene, poly-4-methyl-1-pentene, polyisoprene or polybutadiene; alternatively, the polyolefin may be a polymer of a cyclic olefin, such as cyclopentene or norbornene. Specifically, the polyolefin may be polyethylene (optionally crosslinked), such as high-density polyethylene (HDPE), high-density and high-molecular-weight polyethylene (HDPE-HMW), high-density and ultra-high-molecular-weight polyethylene (HDPE-UHMW), medium-density polyethylene (MDPE), low-density polyethylene (LDPE), linear low-density polyethylene (LLDPE), very low-density polyethylene (VLDPE), and mixtures thereof.

The polyolefin also may be a copolymer of a mono-olefin and a diene, or a copolymer of a mono-olefin and/or a diene with another vinyl monomer, for example an ethylene-propylene copolymer, a copolymer of linear low-density polyethylene (LLDPE) and low-density polyethylene (LDPE), a propylene-1-butene copolymer, a propylene-isobutylene copolymer, an ethylene-1-butene copolymer, an ethylene-hexene copolymer, an ethylene-methylpentene copolymer, an ethylene-heptene copolymer, an ethylene-octene copolymer, a propylene-butadiene copolymer, an isobutylene-isoprene copolymer, an ethylene-alkyl acrylate copolymer, an ethylene-alkyl methacrylate copolymer, an ethylene-vinyl acetate copolymer and a copolymer thereof with carbon monoxide, an ethylene-acrylic acid copolymer and a salt thereof (an ionomer), and a terpolymer of ethylene, propylene and a diene (such as, hexadiene, dicyclopentadiene or ethylidene norbornene). Furthermore, the polyolefin may also be a mixture of the fore-mentioned polymers or copolymers with one another, for example, polypropylene/an ethylene-propylene copolymer, LDPE/an ethylene-vinyl acetate copolymer, LDPE/an ethylene-acrylic acid copolymer, LLDPE/an ethylene-vinyl acetate copolymer, LLDPE/an ethylene-acrylic acid copolymer, and an alternating or statistically constructed polyalkylene-carbon monoxide copolymer; alternatively, the polyolefin may also be a mixture of the fore-mentioned polymers or copolymers with other polymers (such as, a polyamide).

In some embodiments, the styrenic polymer may be a copolymer of styrene or $\alpha$-methylstyrene with a diene or an acrylic derivative, such as a styrene-butadiene copolymer, a styrene-acrylonitrile copolymer, a styrene-alkyl methacrylate copolymer, a styrene-butadiene-alkyl acrylate copolymer, a styrene-butadiene-alkyl methacrylate copolymer, a styrene-maleic anhydride copolymer, and a styrene-acrylonitrile-methyl acrylate copolymer. In addition, the styrenic polymer may

be a high-impact-strength mixture of a styrene copolymer and another polymer (such as a polyacrylate, a diene polymer or an ethylene-propylene-diene terpolymer); and the styrenic polymer may also be a block copolymer of styrene, such as a styrene-butadiene-styrene block copolymer, a styrene-isoprene-styrene block copolymer, a styrene-ethylene/butylene-styrene block copolymer or a styrene-ethylene/ propylene-styrene block copolymer.

In some embodiments, the styrenic polymer may be a graft copolymer of styrene or $\alpha$-methylstyrene, or a mixture thereof. For example, the styrenic polymer may be a graft copolymer of styrene onto polybutadiene; a graft copolymer of styrene onto a polybutadiene-styrene copolymer or a polybutadiene-acrylonitrile copolymer; a graft copolymer of styrene and acrylonitrile (or methacrylonitrile) onto polybutadiene; a graft copolymer of styrene, acrylonitrile and methyl methacrylate onto polybutadiene; a graft copolymer of styrene and maleic anhydride onto polybutadiene; a graft copolymer of styrene, acrylonitrile and maleic anhydride or maleimide onto polybutadiene; a graft copolymer of styrene and maleimide onto polybutadiene; a graft copolymer of styrene and alkyl acrylate or alkyl methacrylate onto polybutadiene; a graft copolymer of styrene and acrylonitrile onto an ethylene-propylene-diene terpolymer; a graft copolymer of styrene and acrylonitrile onto a polyalkyl acrylate or a polyalkyl methacrylate; a graft copolymer of styrene and acrylonitrile onto an acrylate-butadiene copolymer; acrylonitrile-butadiene-styrene (ABS) copolymer, methyl methacrylate-butadiene-styrene (MBS) copolymer, acrylonitrile-styrene-acrylate (ASA) copolymer, or acrylonitrile-ethylene-styrene (AES) copolymer.

In some embodiments, the polyamide may be (i) a polyamide or copolyamide derived froman diamine and a dicarboxylic acid and/or (ii) a polyamide or copolyamide derived from an aminocarboxylic acid and a corresponding lactam, such as polyamide 6 (polycaprolactam, PA6), polyamide 66 (poly(hexamethylene adipamide), PA66), polyamide 46 (poly(tetramethylene adipamide), PA46). Alternatively, the polyamide may be an aromatic polyamide derived from meta-xylene, a diamine and adipic acid. Alternatively, the polyamide may be a polyamide prepared from hexamethylenediamine, isophthalic acid and/or terephthalic acid and optionally an elastomer serving as a modifier, such as, poly(hexamethylene isophthalamide), poly(hexamethylene terephthalamide), poly(2,4,4-trimethylhexamethylene terephthalamide), or poly(m-phenylene isophthalamide). Alternatively, the polyamide may be a block copolymer of a polyamide with a polyolefin, an olefin copolymer, an ionomer or a chemically bonded or grafted elastomer; or a block copolymer of a polyamide with a polyether, such as polyethylene glycol, polypropylene glycol or polybutylene glycol.

In some embodiments, the polyester may be a polyester derived from a dicarboxylic acid and a diol and/or a polyester derived from a hydroxycarboxylic acid or a corresponding lactone, such as polyethylene terephthalate, polybutylene terephthalate, poly-1,4-dihydroxymethylcyclohexane terephthalate, and polyhydroxybenzoate. Alternatively, the polyester may be a poly(ether ester) block co-polymer derived from a polyether having a hydroxyl end group. Alternatively, the polyester may be a polyester modified with polycarbonate or a methyl methacrylate-butadiene-styrene (MBS) copolymer.

In some embodiments, the filler or reinforced material may be (i) an oxygen-containing silicon compound;(ii) a metal compound, wherein the metal is a chemical element found in Group IIA of the periodic table; specifically, a magnesium compound, such as magnesium oxide, magnesium hydroxide, hydrotalcite, dihydrotalcite, magnesium carbonate or magnesium calcium carbonate; or a calcium compound, such as calcium hydroxide, calcium oxide, hydrocalumite; (iii) an aluminum compound, such as aluminum oxide, aluminum hydroxide, boehmite, gibbsite or aluminum phosphate; and/or (iv) red phosphorus, a zinc compound, or a glass fiber.

Compared with the prior art, the present disclosure has the following beneficial effects.

The present disclosure provides a polymer additive, which has a specific dual enthalpy ratio $\Delta$H and specific peak temperatures, including T1 (a peak temperature of the exothermic peak on the cooling curve), $T_2$ (a peak temperature of the first endothermic peak on the second heating curve), and T3 (a peak temperature of the second endothermic peak on the second heating curve). When these parameters are all defined in the above-mentioned specific ranges, the polymer additive has a specific crystal transition state, and a polymer molding material comprising the polymer additive has lower molding shrinkage during the molding process.

## DETAILED DESCRIPTION

The present disclosure is further described in conjunction with accompanying figures and specific examples. These examples do not limit the present disclosure in any form. Unless otherwise specified, reagents, methods and equipment used in the present disclosure are all conventional one(s) in the art.

Raw materials used in the examples and comparative examples were described as follows:

Glass fiber, Type: ECS10-03-568H, purchased from China Jushi Co., Ltd, China.
Base resin 1: Polyamide 66 (PA66), Type: EPR24, purchased from Henan Shenma Nylon Chemical Co., Ltd., China.
Base resin 2: Polybutylene terephthalate (PBT), Type: GX121, purchased from Sinopec Yizheng Chemical Fiber Co., Ltd., China.
Base resin 3: Polyamide 6 (PA6), Type: M2000, purchased from Guangdong Hengshen Meida New Materials Co., Ltd., China.

Synergist 1: Melamine polyphosphate (MPP), Type: Budit 3141, purchased from Budenheim International GmbH.
Synergist 2: Zinc borate, Type: ZB-503, Anhui Estone Materials Technology Co., Ltd.
Synergist 3: Aluminum phosphite, commercially available.
Sodium hypophosphite monohydrate, commercially available.
Sodium persulfate, commercially available.
Aluminum sulfate, commercially available.
Monolauryl phosphate, commercially available.
Laureth phosphate, commercially available.
Potassium laureth phosphate, commercially available.

Unless otherwise specified, all components or ingredients used in parallel examples and comparative examples are identical and commercially available.

**Example** 1 A **polymer additive**

(1) 318 g of solid sodium hypophosphite monohydrate, 400 g of water and 2 g of tert-butyl peroxy-2-ethylhexanoate were placed in an autoclave, and air in the reactor was replaced by nitrogen for 5 times. Then, ethylene was introduced into the autoclave, and a pressure of the ethylene in the autoclave was kept constant at 0.6 MPa through a pressure reducer. A temperature in the autoclave was raised to 85 °C and held for 4 h, and 4 g of the tert-butyl peroxy-2-ethylhexanoate was continuously added during the 4-hour heat preservation process. Then, the temperature was further kept at 95 °C for 1 h, and the autoclave was cooled down and vented to obtain an intermediate aqueous solution containing sodium diethylphosphinate.

(2) 20wt.% of sodium hydroxide aqueous solution was added into the intermediate aqueous solution containing sodium diethylphosphinate obtained in step (1) to neutralize a free acid, until a pH of 6 was reached. After neutralization, the intermediate aqueous solution containing sodium diethylphosphinate was diluted with water until a weight percentage of the sodium diethylphosphinate in the intermediate aqueous solution was 20 wt.%. Then, 0.03 wt.% (the additive amount is based on a weight of the diluted sodium diethylphosphinate aqueous solution) of monolauryl phosphate was added, and 1/6 equivalent weight (based on a molar amount of the sodium diethylphosphinate) of an aluminum sulfate aqueous solution (a weight percentage of aluminum sulfate in the aluminum sulfate aqueous solution was 20 wt.%) was added dropwise at 40°C, with an addition time of 40 minutes. After the reaction temperature was raised to 55°C, the remaining 5/6 equivalent weight (based on the molar amount of the sodium diethylphosphinate) of the 20 wt.% aluminum sulfate aqueous solution was also added dropwise, with an addition time of 40 minutes. A resulting mixture was cooled and filtered, successively; a filter cake was washed for 3 times with water in an amount of 3 times the weight of the filter cake, and dried at 120°C to a constant weight, thereby obtaining the polymer additive.

**Example** 2 A **polymer additive**

(1) 318 g of solid sodium hypophosphite monohydrate, 400 g of water and 2 g of sodium persulfate were placed in an autoclave, and air in the reactor was replaced by nitrogen for 5 times. Then, ethylene was introduced into the autoclave, and a pressure of the ethylene in the autoclave was kept constant at 1.5 MPa through a pressure reducer. A temperature in the autoclave was raised to 110 °C and held for 4 h. A sodium persulfate solution prepared by 4 g of sodium persulfate and 36 g of water was continuously added during the 4-hour heat preservation process. Then, the temperature was further kept at 110 °C for 1 h, and the autoclave was cooled down and vented to obtain an intermediate aqueous solution containing sodium diethylphosphinate.

(2) 20wt.% of sodium hydroxide aqueous solution was added into the intermediate aqueous solution containing sodium diethylphosphinate obtained in step (1) to neutralize a free acid, until a pH of 6 was reached. After neutralization, the intermediate aqueous solution containing sodium diethylphosphinate was diluted with water until a weight percentage of the sodium diethylphosphinate in the intermediate aqueous solution was 20 wt.%. Then, 0.02 wt.% (the additive amount is based on a weight of the diluted sodium diethylphosphinate aqueous solution) of laureth phosphate was added, and 1/6 equivalent weight (based on a molar amount of the sodium diethylphosphinate) of an aluminum sulfate aqueous solution (a weight percentage of aluminum sulfate in the aluminum sulfate aqueous solution was 20 wt.%) was added dropwise at 35 °C, with an addition time of 40 minutes. After the reaction temperature was raised to 55 °C, the remaining 5/6 equivalent weight (based on the molar amount of the sodium diethylphosphinate) of the 20 wt.% aluminum sulfate aqueous solution was further added dropwise, with an addition time of 30 minutes. A resulting mixture was cooled and filtered, successively; a filter cake was washed for 3 times with water in an amount of 3 times the weight of the filter cake, and dried at 120°C to a constant weight, thereby obtaining the polymer additive.

**Example** 3 A **polymer additive**

The difference between Example 3 and Example 1 was in step (2), and the step (2) of Example 3 was as follows.

(2) 20wt.% of sodium hydroxide aqueous solution was added into the intermediate aqueous solution containing sodium diethylphosphinate obtained in step (1) to neutralize a free acid, until a pH of 6 was reached. After neutralization, the intermediate aqueous solution containing sodium diethylphosphinate was diluted with water until a weight percentage of the sodium diethylphosphinate in the intermediate aqueous solution was 20 wt.%. Then, 0.04 wt.% (the additive amount is based on a weight of the diluted sodium diethylphosphinate aqueous solution) of laureth phosphate was added, and 1/3 equivalent weight (based on a molar amount of the sodium diethylphosphinate) of an aluminum sulfate aqueous solution (a weight percentage of aluminum sulfate in the aluminum sulfate aqueous solution was 20 wt.%) was added dropwise at 35 °C, with an addition time of 40 minutes. After the reaction temperature was raised to 55 °C, the remaining 2/3 equivalent weight (based on the molar amount of the sodium diethylphosphinate) of the 20 wt.% aluminum sulfate aqueous solution was further added dropwise, with an addition time of 20 minutes. A resulting mixture was cooled and filtered, successively; a filter cake was washed for 3 times with water in an amount of 3 times the weight of the filter cake, and dried at 120°C to a constant weight, thereby obtaining the polymer additive.

**Example** 4 A **polymer additive**

The difference between Example 4 and Example 2 was in step (2), and the step (2) of Example 4 was as follows.

(2) 20wt.% of sodium hydroxide aqueous solution was added into the intermediate aqueous solution containing sodium diethylphosphinate obtained in step (1) to neutralize a free acid, until a pH of 6 was reached. After neutralization, the intermediate aqueous solution containing sodium diethylphosphinate was diluted with water until a weight percentage of the sodium diethylphosphinate in the intermediate aqueous solution was 22 wt.%. Then, 0.05 wt.% (the additive amount is based on a weight of the diluted sodium diethylphosphinate aqueous solution) of potassium laureth phosphate was added. Then, one equivalent weight (based on a molar amount of the sodium diethylphosphinate) of an aluminum sulfate aqueous solution (a weight percentage of aluminum sulfate in the aluminum sulfate aqueous solution was 22 wt.%) was added dropwise at a temperature slowly raised from 30 °C to 60 °C at a heating rate of 4°C per 10 minutes, with a total addition time of 100 minutes. A resulting mixture was cooled and filtered, successively; a filter cake was washed for 3 times with water in an amount of 3 times the weight of the filter cake, and dried at 120°C to a constant weight, thereby obtaining the polymer additive.

**Example** 5 A **polymer additive**

(1) 396 kg of a hypophosphorous acid aqueous solution (a weight percentage of hypophosphorous acid in the hypophosphorous acid aqueous solution was 50 wt.%) was added to an autoclave, air in the autoclave was replaced with 0.6 MPa nitrogen for 5 times, and ethylene was introduced into the autoclave until a pressure of the ethylene in the autoclave was 1.0 MPa. The autoclave was heated to 80 °C under stirring, and the temperature was kept at 80 °C for 3 h. 40 g of a sodium persulfate aqueous solution (a weight percentage of sodium persulfate in the sodium persulfate aqueous solution was 10 wt.%) was continuously added into the autoclave during the 3-hour heat preservation process. During the heat preservation process, materials in the autoclave was pumped into a liquid inlet of a venturi ejector through a bottom valve of the autoclave by a centrifugal pump, and the ethylene gas in the upper portion of the autoclave was introduced from a gas inlet of the venturi ejector; the gas and liquid phases were fully mixed and introduced into the autoclave after external circulation; fresh ethylene was introduced from the gas inlet of the venturi ejector to supplement those consumed by the reaction, thereby maintaining the pressure in the autoclave stable at 1.0 MPa. After the initiator was added, the autoclave was kept at 80 °C for 1 h, then cooled and vented to obtain a diethylphosphinic acid aqueous solution.

(2) At 20°C, 60 g of sodium hydroxide and 1140 g of water were adopted to prepare a sodium hydroxide aqueous solution, which was slowly dripped within 1.5 h into an aluminum sulfate aqueous solution prepared by 333 g of aluminum sulfate octadecahydrate and 777 g of water to obtain an aluminum hydroxide gel.

(3) The aluminum hydroxide gel was continuously dripped into the diethylphosphinic acid aqueous solution (a molar ratio of the diethylphosphinic acid to an aluminum ion was 3:1) within 3 hours. Then, a reaction temperature was raised

to 60 °C at a heating rate of 5°C/h, and held at 60 °C for 0.5 hours; subsequently, the reaction temperature was further raised to 100 °C at a heating rate of 20 °C/h, and held at 100 °C for 0.5 hours. A resulting mixture was cooled and filtered, successively; a filter cake was washed for 3 times with water in an amount of 3 times the weight of the filter cake, and dried at 120 °C to a constant weight, thereby obtaining the polymer additive.

**Example** 6 A **polymer additive**

The difference between Example 6 and Example 5 were in step (2) and step (3), and the steps (2)-(3) of Example 6 were as follows.

(2) At 10°C, 60 g of sodium hydroxide and 1140 g of water were adopted to prepare a sodium hydroxide aqueous solution, which was slowly dripped within 1.5 h into an aluminum sulfate aqueous solution prepared by 333 g of aluminum sulfate octadecahydrate and 777 g of water to obtain an aluminum hydroxide gel.

(3) The aluminum hydroxide gel was continuously dripped into the diethylphosphinic acid aqueous solution (a molar ratio of the diethylphosphinic acid to an aluminum ion was 3:1) within 3 hours. Then, a reaction temperature was raised to 60 °C at a heating rate of 10 °C/h, and held at 60 °C for 0.5 hours; subsequently, the reaction temperature was further raised to 100 °C at a heating rate of 20 °C/h, and held at 100 °C for 0.5 hours. A resulting mixture was cooled and filtered, successively; a filter cake was washed for 3 times with water in an amount of 3 times the weight of the filter cake, and dried at 120 °C to a constant weight, thereby obtaining the polymer additive.

Comparative Example 1

An existing polymer additive 1, Grade: XHPFR-1040, purchased from Zhejiang Xinhua Chemical Co., Ltd., was used.

Comparative Example 2

An existing polymer additive 2, Grade: ADP-30, purchased from Lanzhou Ruipu Technology Co., Ltd., was used.

**Testing Example**

(1) The polymer additives prepared in the above-mentioned Examples 1-6 and the polymer additives in Comparative Examples 1-2 were dissolved in a deuterated water ($D_2O$) solution of sodium hydroxide, and their phosphorus-31 nuclear magnetic resonance spectroscopy were tested.

(1) Instrument: Nuclear magnetic resonance spectrometer (Bruker 400M).
(2) Reagent: 10 wt.% deuterated water solution of sodium hydroxide.
(3) Experimental method: weighing about 0.1 g (with an accuracy of 0.0001g) of a sample to be tested, adding the sample to be tested into 5g of the 10 wt.% deuterated water solution of sodium hydroxide, and dissolving the sample to be tested by ultrasound to obtain a mixture; transferring the mixture to a nuclear magnetic tube, and then placing the nuclear magnetic tube in the nuclear magnetic resonance spectrometer, scanning the nuclear magnetic tube to obtain a nuclear magnetic resonance spectrum; integrating peaks of the aluminum diethylphosphinate and aluminum ethylbutylphosphinate in the nuclear magnetic resonance spectrum to obtain molar percentages of the two, finally obtaining weight percentages of the two after conversion.

Testing results of the polymer additives in percentages by weight were shown in Table 1 below.

Table 1

| Component | Example 1 | Example 2 | Example 3 | Example 4 | Example 5 | Example 6 | Comparative Example 1 | Comparative Example 2 |
|---|---|---|---|---|---|---|---|---|
| Aluminum diethylphosphinate | 99.3% | 99.1% | 99.6% | 99.1% | 99.9% | 99.9% | 98.4% | 99.6% |
| Aluminum ethylbutylphosphinate | 0.7% | 0.9% | 0.4% | 0.9% | 0.1% | 0.1% | 1.6% | 0.4% |

(2) The polymer additives prepared in Examples 1-6 and the polymer additives in Comparative Examples 1-2 were tested by differential scanning calorimetry (DSC) (DSC 214, NETZSCH DSC 204 F1, Germany), and a testing method was as follows: under nitrogen atmosphere, a polymer additive was heated from room temperature to a maximum temperature of 300 °C at a heating rate of 20 °C/min; after staying at 300 °C for 3 minutes, the polymer additive was cooled to room temperature at a rate of 20 °C/min to obtain a cooling curve of the polymer additive; after staying at room temperature for 3 minutes, the polymer additive was reheated to the maximum temperature of 300 °C at a heating rate of 20 °C/min to obtain a second heating curve of the polymer additive;

wherein H1 represents a peak area under an exothermic peak formed between an onset temperature and an endset temperature of the exothermic peak on the cooling curve; two endothermic peaks on the second heating curve, ordered from low to high temperatures, are respectively defined as a first endothermic peak and a second endothermic peak; H2 represents a peak area under the first endothermic peak formed between an onset temperature and an endset temperature of the first endothermic peak on the second heating curve, H3 represents a peak area under the second endothermic peak formed between an onset temperature and an endset temperature of the second endothermic peak on the second heating curve;

in Table 2 below, $\Delta H = (H2+H3)/H1$;

T1 is a peak temperature of the exothermic peak on the cooling curve, T2 is a peak temperature of the first endothermic peak on the second heating curve, and T3 is a peak temperature of the second endothermic peak on the second heating curve.

The above peak temperatures and peak areas were obtained by calibration or calculation of the software provided in NETZSCH DSC 204 F1.

Testing results of the polymer additives of Examples 1-6 and Comparative Examples 1-2 were shown in Table 2 below.

Table 2

| | H1 | H2 | H3 | ΔH | T1, °C | T2, °C | T3, °C |
|---|---|---|---|---|---|---|---|
| Example 1 | 24.38 | 8.38 | 15.69 | 0.99 | 155.3 | 175.9 | 190.1 |
| Example 2 | 20.89 | 7.96 | 13.27 | 1.02 | 140.6 | 177.3 | 184.0 |
| Example 3 | 25.14 | 7.82 | 15.31 | 0.92 | 153.4 | 177.6 | 191.9 |
| Example 4 | 21.44 | 9.04 | 13.47 | 1.05 | 151.3 | 172.0 | 184.9 |
| Example 5 | 22.33 | 8.34 | 14.45 | 0.98 | 144.8 | 174.6 | 186.3 |
| Example 6 | 23.96 | 9.15 | 16.07 | 0.95 | 147.3 | 179.9 | 188.2 |
| Comparative Example 1 | 19.99 | 7.81 | 14.91 | 0.88 | 132 | 174 | 186 |
| Comparative Example 2 | 24.05 | 9.21 | 16.52 | 1.07 | 142 | 179 | 195 |

(3) The polymer additives of Examples 1-6 (E1-E6) and Comparative Examples 1-2 (CE1-CE2) were respectively used as a flame retardant, and were each blended and extruded with a synergist, a glass fiber, and a base resin to obtain a polymer molding material. The amounts of various components in Examples 7-16 (E7-E16) and Comparative Examples 3-5 (CE3-CE5) were shown in Table 3 by weight.

Table 3

| | E7 | E8 | E9 | E10 | E11 | E12 | E13 | E14 | E15 | E16 | CE3 | CE4 | CE5 |
|---|---|---|---|---|---|---|---|---|---|---|---|---|---|
| Base resin 1 | 58 | 58 | 58 | 58 | 58 | 58 | 58 | 58 | / | / | 58 | 58 | / |
| Base resin 2 | / | / | / | / | / | / | / | / | 58 | / | / | / | 58 |
| Base resin 3 | / | / | / | / | / | / | / | / | / | 58 | / | / | / |
| Glass fiber | 30 | 30 | 30 | 30 | 30 | 30 | 30 | 30 | 30 | 30 | 30 | 30 | 30 |
| Synergist 1 | 3 | 3 | 3 | 3 | 3 | 3 | 1.5 | / | 3 | 3 | 3 | 3 | 3 |
| Synergist 2 | / | / | / | / | / | / | 1.5 | / | / | / | / | / | / |
| Synergist 3 | / | / | / | / | / | / | / | 3 | / | / | / | / | / |

(continued)

| | | E7 | E8 | E9 | E10 | E11 | E12 | E13 | E14 | E15 | E16 | CE3 | CE4 | CE5 |
|---|---|---|---|---|---|---|---|---|---|---|---|---|---|---|
| Polymer additive | E1 | 9 | / | / | / | / | / | 9 | 9 | 9 | 9 | / | / | / |
| | E2 | / | 9 | / | / | / | / | / | / | / | / | / | / | / |
| | E3 | / | / | 9 | / | / | / | / | / | / | / | / | / | / |
| | E4 | / | / | / | 9 | / | / | / | / | / | / | / | / | / |
| | E5 | / | / | / | / | 9 | / | / | / | / | / | / | / | / |
| | E6 | / | / | / | / | / | 9 | / | / | / | / | / | / | / |
| | CE1 | / | / | / | / | / | / | / | / | / | / | 9 | / | 9 |
| | CE2 | / | / | / | / | / | / | / | / | / | / | / | 9 | / |

The molding shrinkage of the polymer molding materials prepared in the above Examples 7-16 and Comparative Examples 3-5 was tested, using a testing method in accordance with Chinese National Standard GB/T 15585-1995, and the molding shrinkage was measured 48 hours after molding. Testing results were shown in Table 4 below.

| Performance index | Lateral shrinkage, % | Longitudinal shrinkage, % |
|---|---|---|
| Example 7 | 0.66 | 0.23 |
| Example 8 | 0.63 | 0.27 |
| Example 9 | 0.70 | 0.29 |
| Example 10 | 0.66 | 0.27 |
| Example 11 | 0.63 | 0.25 |
| Example 12 | 0.60 | 0.21 |
| Example 13 | 0.69 | 0.28 |
| Example 14 | 0.55 | 0.19 |
| Example 15 | 0.81 | 0.23 |
| Example 16 | 0.68 | 0.21 |
| Comparative Example 3 | 0.80 | 0.32 |
| Comparative Example 4 | 0.92 | 0.36 |
| Comparative Example 5 | 0.97 | 0.30 |

As can be seen from the testing results of the Examples 7-16 and Comparative example 3-5, the polymer molding materials comprising the polymer additives of the present disclosure had lower molding shrinkage during the molding and application process. The polymer molding materials comprising the polymer additives of the present disclosure had lateral shrinkage of equal to or less than 0.81%, and longitudinal shrinkage of equal to or less than 0.29%.

As can be seen from Example 7 and Examples 13-14, different synergists were used in the polymer molding materials, and they all achieved good molding shrinkage. As can be seen from Example 7 and Examples 15-16, different base resins were used to prepare polymer molding materials, and they all achieved good molding shrinkage.

As can be seen from Examples 7-12 and Comparative examples 3-4, when the dual enthalpy ratio $\Delta H$ and peaks temperatures T1, T2, T3 of the polymer additives of the present disclosure were within specific ranges, the lateral shrinkage and longitudinal shrinkage of the polymer molding materials comprising the polymer additives of the present disclosure were significantly reduced.

The aforementioned examples are merely illustrative and are used to explain some features of the method of the present disclosure. The attached claims are intended to claim a widest possible range that can be imagined, and the examples described herein are demonstrated by the applicant's actual test results. Therefore, the applicant intends that the attached claims are not limited by the selection of examples that illustrate the features of the present disclosure. Certain numerical ranges used in the claims also include sub-ranges therein, and variations within these ranges should also be construed to be covered by the appended claims in any possible case.

## Claims

1. A polymer additive, comprising aluminum diethylphosphinate and aluminum ethylbutylphosphinate;

   the polymer additive satisfies a relationship of $0.90 \leq \Delta H \leq 1.05$, wherein $\Delta H$ is a dual enthalpy ratio and defined by Equation (1), and the polymer additive further satisfies following relationships: 135 °C ≤ T1 ≤ 160 °C, 165 °C ≤ T2 ≤ 185 °C, and 180 °C ≤ T3 ≤ 200 °C;

   $$\Delta H=(H2+H3)/H1 \qquad (1);$$

   the H1, H2, H3, T1, T2 and T3 are measured by differential scanning calorimetry (DSC) comprising the following steps: in nitrogen atmosphere, heating the polymer additive from room temperature to a maximum temperature of 300 °C at a heating rate of 20 °C/min, holding the maximum temperature for 3 minutes, and then cooling the polymer additive from the maximum temperature to room temperature at a cooling rate of 20 °C/min to obtain a cooling curve of the polymer additive; keeping the polymer additive at room temperature for 3 minutes, and then reheating the polymer additive from room temperature to the maximum temperature of 300 °C at a heating rate of 20 °C/min to obtain a second heating curve of the polymer additive;
   H1 represents a peak area under an exothermic peak formed between an onset temperature and an endset temperature of the exothermic peak on the cooling curve; two endothermic peaks on the second heating curve, ordered from low to high temperatures, are respectively defined as a first endothermic peak and a second endothermic peak; H2 represents a peak area under the first endothermic peak formed between an onset temperature and an endset temperature of the first endothermic peak on the second heating curve, H3 represents a peak area under the second endothermic peak formed between an onset temperature and an endset temperature of the second endothermic peak on the second heating curve;
   T1 is a peak temperature of the exothermic peak on the cooling curve, T2 is a peak temperature of the first endothermic peak on the second heating curve, and T3 is a peak temperature of the second endothermic peak on the second heating curve.

2. The polymer additive according to claim 1, wherein the polymer additive comprises, in percentages by weight, 99.01 wt.% - 99.99wt.% of aluminum diethylphosphinate and 0.01 wt.%-0.99 wt.% of aluminum ethylbutylphosphinate.

3. The polymer additive according to claim 1, wherein the aluminum diethylphosphinate and the aluminum ethylbutylphosphinate exist in a form of a physical mixture; and/or
   the aluminum diethylphosphinate and the aluminum ethylbutylphosphinate exist in a form of an ionic chemical coprecipitate represented by formula I and /or formula II;

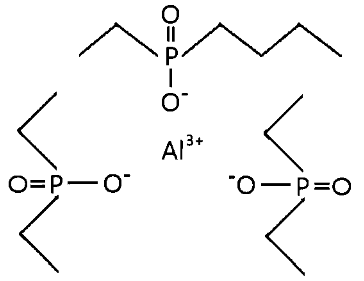

I

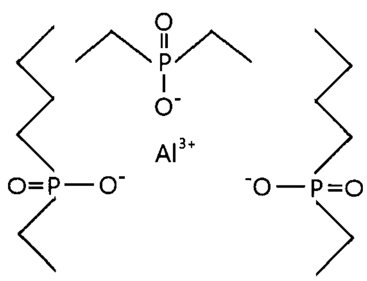

II.

4. The polymer additive according to claim 1, wherein the dual enthalpy ratio $\Delta H$ of the polymer additive satisfies the relationship of $0.92 \leq \Delta H \leq 1.05$.

5. The polymer additive according to claim 1 or claim 4, wherein the polymer additive satisfies the following relationships: 140 °C ≤ T1 ≤ 156 °C, 172 °C ≤ T2 ≤ 178 °C, and 184 °C ≤ T3 ≤ 192 °C.

6. A preparation method of the polymer additive according to any one of claims 1-5, comprising the following steps:

S1. under nitrogen protection, allowing a water-soluble hypophosphite or hypophosphorous acid to react with an olefin in the presence of an initiator, so that 2.00 to 2.05 molecules of olefins are added to each phosphorus atom in the water-soluble hypophosphite or hypophosphorous acid itself, thereby obtaining an intermediate aqueous solution containing a diethylphosphinate;
S2. allowing the intermediate aqueous solution obtained in the step S1, a surfactant and an aluminum salt solution to react, thereby obtaining the polymer additive.

**7.** The preparation method according to claim 6, wherein in the step S1, a reaction temperature is in a range of from 80 °C to 120 °C; and/or

in the step S1, a reaction pressure is in a range of from 0.6 MPa to 2.0 MPa; and/or
in the step S2, a weight percentage of the diethylphosphinate in the intermediate aqueous solution is in a range of from 15 wt.% to 25 wt.%; and/or
in the step S2, a weight percentage of a water-soluble aluminum salt in the aluminum salt solution is in a range of from 20 wt.% to 24 wt.%; and/or
in the step S2, the surfactant is one or more selected from the group consisting of an alkyl phosphate ester, a salt of the alkyl phosphate ester, an ether alcohol phosphate ester and a salt of the ether alcohol phosphate ester; and/or
in the step S2, the aluminum salt solution is added in one go, a reaction temperature is raised to 50-60 °C during the addition process of the aluminum salt solution, and an addition time of the aluminum salt solution is controlled to be 90-110 minutes; alternatively, in the step S2, the aluminum salt solution is added in two stages, wherein in a first stage, 15%-35% of an equivalent weight of the aluminum salt solution is added with an addition time of 30-40 minutes, and a reaction temperature is controlled to be 35-45°C; in a second stage, 65%-85% of the equivalent weight of the aluminum salt solution is added with an addition time of 30-40 minutes, and the reaction temperature is controlled to be 55-60 °C.

**8.** A preparation method of the polymer additive according to any one of claims 1-5, comprising the following steps:

S1. under nitrogen protection, allowing a hypophosphorous acid to react with an olefin in the presence of an initiator, so that 2.00 to 2.05 molecules of olefins are added to each phosphorus atom in the hypophosphorous acid itself, thereby obtaining an intermediate aqueous solution containing a diethylphosphinic acid;
S2. preparing an aluminum hydroxide gel;
S3. dripping the intermediate aqueous solution obtained in the step S1 into the aluminum hydroxide gel obtained in the step S2 for reaction, raising a reaction temperature to 50-60 °C, holding the reaction temperature for 0.1-5 h, further raising the reaction temperature to 90-120 °C, and holding the reaction temperature for 0.5-5 h, thereby obtaining the polymer additive.

**9.** A use of the polymer additive according to any one of claims 1-5 in reducing the shrinkage of a polymer.

**10.** A use of the polymer additive according to any one of claims 1-5 as a reactive or non-reactive flame retardant for at least one selected from the group consisting of a polymer, a varnish, a foaming coating, wood and other cellulose-containing products; or a use of the polymer additive according to any one of claims 1-5 in preparation of a flame-retardant polymer molding material or a flame-retardant polymer molding; or a use of the polymer additive according to any one of claims 1-5 for imparting flame retardancy to a polyester fabric, and/or a pure cellulose fabric, and/or a blended cellulose fabric by impregnation.

**11.** The use of the polymer additive according to claim 10, wherein the polymer additive is used together with a synergist; the synergist is one or more selected from the group consisting of melamine phosphate, di(melamine) phosphate, penta(melamine) triphosphate, tri(melamine) diphosphate, tetra(melamine) triphosphate, hexa(melamine) pentaphosphate, melamine diphosphate, melamine tetraphosphate, melamine pyrophosphate, melamine polyphosphate, melam polyphosphate, melem polyphosphate, and melon polyphosphate; or, the synergist is a melamine condensation product, such as melam, melem, and/or melon; or, the synergist is one or more selected from the group consisting of an oligoester of tris(2-hydroxyethyl) isocyanurate and aromatic polycarboxylic acid, benzoguanamine, tris(2-hydroxyethyl) isocyanurate, allantoin, glycoluril, melamine, melamine cyanurate, urea cyanurate, dicyandiamide, and guanidine; or, the synergist is a nitrogen-containing phosphate having a formula of $(NH_4)_yH3\text{-}yPO_4$ or $(NH_4PO_3)_z$, wherein y is 1-3 and z is 1-10000; or, the synergist is aluminum phosphite, and/or aluminum pyrophosphite; or, the synergist is one or more selected from the group consisting of zinc borate, zinc carbonate, zinc stannate, basic zinc stannate, zinc phosphate, zinc oxide, zinc hydroxide, tin oxide hydrate, basic zinc silicate, magnesium hydroxide, hydrotalcite, and magnesium carbonate; or, the synergist is one or more selected from the group consisting of

ethylphosphonate, butylphosphonate, n-butylphosphonate, sec-butylphosphonate, and hexylphosphonate.

**12.** The use of the polymer additive according to claim 10 or claim 11, wherein the polymer additive is used together with another additive, wherein the another additive is at least one selected from the group consisting of an antioxidant, an UV stabilizer, a gamma ray stabilizer, a hydrolysis stabilizer, an antistatic agent, an emulsifier, a nucleating agent, a softener, a processing aid, an impact modifier, a dye, and a pigment.

**13.** The use of the polymer additive according to claim 12, wherein 0.0001 wt.% - 99.7999 wt.% of the polymer additive, 0.1 wt.% - 40 wt.% of the synergist and 0.1 wt.% - 40 wt. % of the another additive are used.

**14.** A flame retardant thermoplastic or thermosetting polymer composite material, wherein the flame retardant thermoplastic or thermosetting polymer composite material is at least one selected from the group consisting of a flame retardant thermoplastic or thermosetting polymer molding material, a flame retardant thermoplastic or thermosetting polymer molding, a flame retardant thermoplastic or thermosetting polymer film, a flame retardant thermoplastic or thermosetting polymer filament, and a flame retardant thermoplastic or thermosetting polymer fiber; and the flame retardant thermoplastic or thermosetting polymer composite material comprises 0.5 wt.% - 45 wt.% of the polymer additive according to any one of claims 1-5, 0.5 wt.% - 95 wt.% of a thermoplastic or thermosetting polymer or a mixture thereof, 0 - 55 wt.% of a synergist, and 0 - 55 wt.% of a filler or a reinforced material.

**15.** The flame retardant thermoplastic or thermosetting polymer composite material according to claim 14, wherein the thermoplastic or thermosetting polymer is one or more selected from the group consisting of a polyester, a polyamide, a thermoplastic elastomer, a thermoplastic polyurethane, a thermoplastic polyester elastomer, a styrenic polymer, a polyketone, a polyolefin, and a polyacrylate.

Europäisches Patentamt
European Patent Office
Office européen des brevets

# EUROPEAN SEARCH REPORT

Application Number
EP 25 21 2864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | CN 104 371 143 A (GUANGZHOU KINGSKY MATERIAL CO LTD)<br>25 February 2015 (2015-02-25)<br>* examples 1-10; tables 1-2 *<br>----- | 1-7,<br>10-15<br><br>8,9 | INV.<br>C07F9/30<br>C08K5/5313<br>D01F1/07<br>D06M13/285 |
| A | CN 108 690 070 A (QINGDAO OPERATE NEW MAT CO LTD; UNIV LANZHOU)<br>23 October 2018 (2018-10-23)<br>----- | 1-15 | |
| A | EP 4 414 370 A1 (JIANGSU LISIDE NEW MAT CO LTD [CN]) 14 August 2024 (2024-08-14)<br>----- | 1-15 | |
| | | | TECHNICAL FIELDS SEARCHED (IPC) |
| | | | C08K<br>C07F<br>D01F<br>D06M<br>D01C<br>A01K |

The present search report has been drawn up for all claims

1

| Place of search | Date of completion of the search | Examiner |
|---|---|---|
| Munich | 1 April 2026 | Lohner, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 21 2864

This annex lists the patent family members relating to the patent documents cited in the above-mentioned European search report. The members are as contained in the European Patent Office EDP file on
The European Patent Office is in no way liable for these particulars which are merely given for the purpose of information.

01-04-2026

| Patent document cited in search report | | Publication date | Patent family member(s) | | | Publication date |
|---|---|---|---|---|---|---|
| CN 104371143 | A | 25-02-2015 | CN | 103937027 | A | 23-07-2014 |
| | | | CN | 104371143 | A | 25-02-2015 |
| CN 108690070 | A | 23-10-2018 | NONE | | | |
| EP 4414370 | A1 | 14-08-2024 | CN | 114478625 | A | 13-05-2022 |
| | | | EP | 4414370 | A1 | 14-08-2024 |
| | | | JP | 7763004 | B2 | 31-10-2025 |
| | | | JP | 2024538313 | A | 18-10-2024 |
| | | | KR | 20240089087 | A | 20-06-2024 |
| | | | US | 2025026771 | A1 | 23-01-2025 |
| | | | WO | 2023168790 | A1 | 14-09-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 110407869 A
- CN 113637193 A